# EUROPEAN PATENT SPECIFICATION

(11) **EP 4 343 293 B1**
(45) Date of publication and mention of the grant of the patent: **06.05.2026**
(21) Application number: 22197606.1
(22) Date of filing: 26.09.2022
(51) Int. Cl.: G01J 5/08, G01N 25/18, G01N 21/00

(54) **SAMPLE HOLDER FOR HOLDING A PLATE-SHAPED SAMPLE IN A LASER/LIGHT FLASH ANALYSIS**
PROBENHALTER ZUR AUFNAHME EINER PLATTENFÖRMIGEN PROBE IN EINER LASER-/LICHTBLITZANALYSE
PORTE-ÉCHANTILLON POUR MAINTENIR UN ÉCHANTILLON EN FORME DE PLAQUE DANS UNE ANALYSE LASER/ÉCLAIR DE LUMIÈRE

(43) Date of publication of application: 27.03.2024
(73) Proprietor: Netzsch-Gerätebau GmbH, 95100 Selb (DE)
(72) Inventor: Lauerer, Alexander, 95030 Hof (DE); Lunev, Artem, 95100 Selb (DE); Lauterbach, Stefan, 95182 Döhlau (DE); Shinoda, Yoshio, Tokyo, 179-0083 (JP)

(56) References cited:
- CN-A- 114 577 843
- JP-A- S5 434 285
- JP-A- S6 250 652
- US-A1- 2009 110 025
- ANONYMOUS APPS ET AL: "Xy Adjustable Optical Slit Two Dimensions Adjustable Slit Lsxf3-20 - Xy Adjustable Optical Slit and Two Dimensions Adjustable Optical Slit", 21 April 2017 (2017-04-21), XP093248747, Retrieved from the Internet <URL:https://jxlskj.en.made-in-china.com/product/UvXmuOSHyFWB/China-Xy-Adjustable-Optical-Slit-Two-Dimensions-Adjustable-Slit-Lsxf3-20.html, https://web.archive.org/web/20170421085826/https://jxlskj.en.made-in-china.com/product/UvXmuOSHyFWB/China-Xy-Adjustable-Optical-Slit-Two-Dimensions-Adjustable-Slit->

## Description

The present invention relates to a sample holder for holding a plate-shaped sample in a laser/light flash analysis according to claim 1.

A laser/light flash analysis of a sample, usually also referred to as "LFA", well known from the prior art comprises irradiating a first side of a sample with an electromagnetic excitation pulse from a radiation source (e.g. a laser or a flash light source), and detecting thermal radiation, which is emitted from a second side of the sample opposite to the first side as a result of the excitation pulse, by means of a radiation detector (e.g. an IR detector).

In many application cases and in view of the invention described below, a more specific embodiment of such an LFA is of interest, which is often also referred to as an "in-plane LFA" and whose characteristic features are that:
- the irradiation with the electromagnetic excitation pulse is carried out only in one or more predetermined localised subareas on the first side of the sample, and
- only thermal radiation emitted from one or more predetermined localized subareas on the second side of the sample as a result of the excitation pulse is detected, wherein said localized areas on the second side of the sample are offset orthogonally to the normal of the sample plane with respect to the localized areas on the first side of the sample.

For the implementation of such an in-plane LFA, the applicant has in the past developed and tested, for example, sample holders according to claim 1, i.e. for holding a plate-shaped sample having a first side and a second side opposite to the first side, wherein the laser/light flash analysis comprises:
- irradiating two first strip-shaped areas on the first side of the sample with an electromagnetic excitation pulse from a radiation source, and
- detecting thermal radiation emitted from a second strip-shaped area on the second side of the sample as a result of the excitation pulse by means of a radiation detector, wherein a longitudinal axis of the second strip-shaped area is parallel to the longitudinal axes of the two first strip-shaped areas but symetrically offset orthogonally to the direction of the longitudinal axes of the two first strip-shaped areas,
and wherein the sample holder comprises:
- a first mask provided to face the radiation source during the laser/light flash analysis and defining two first slits corresponding to the two first strip-shaped areas on the first side of the sample, for providing a selective irradiation of the two first strip-shaped areas,
- a second mask provided to face the radiation detector during the laser/light flash analysis and defining a second slit corresponding to the second strip-shaped area on the second side of the sample, for providing a selective detection of radiation emitted from the second strip-shaped area, and
- a receiving space provided between the first mask and the second mask for receiving the sample with the first side facing the first mask and the second side facing the second mask.

Such a "slit-in-plane sample holder" can advantageously be used for measurements of in-plane thermal diffusivities, i.e. orthogonal to the direction of passage of the heat transfer (heat conduction and/or radiation) through the sample.

In the LFA and the in-plane LFA, a temporal progression of the detected intensity of the thermal radiation emitted from the second side of the sample is characterised primarily by a half-time, which can be defined, for example, as half of the time that is required to reach the maximum of the registered detector signal after the excitation pulse has hit the first side of the sample.

If "d" denotes the lateral distance between the first slit (irradiation area) and the second slit (detection area) and "a" the thermal diffusivity of the sample measured in the plane of the sample in the direction orthogonal to the slits, the aforementioned half-time results as proportional to the expression d² / a.

Due to the given fixed arrangement of the slits in the known sample holder, the numerator (d²) in this expression is constant. Therefore, a decreasing thermal diffusivity (a) leads to longer measurement times.

However, with longer measurement times, a heat exchange between the sample and an environment of the sample (in particular e.g. sample holder), which cannot be completely avoided in practice, can make a parasitic contribution to the measured signal (The contribution of the sample holder to heat exchange adds uncertainty to the thermal diffusivity measurement). This finally leads to a biased value of the thermal diffusivity determined by means of the LFA. On the other hand, if the measurement time is too short, additional uncertainty is associated with the finite pulse effects.

Therefore, the distance "d" between the slits is ideally selected experimentally so that the measurement time in the LFA lies within a desired range (usually e.g. about 100 ms).

Another result of the applicant's tests of the slit-in-plane sample holder is that the width and the length of the slits have to be chosen appropriately to optimise the signal-to-noise ratio (SNR) when detecting the thermal radiation, bearing in mind that too small slits reduce the signal intensity and thus the SNR, and that too large slits can falsify the "in plane" measurement.

Finally, it has also become apparent that a single in-plane sample holder cannot be used for measurements on samples of different dimensions, e.g. different thicknesses or different lateral dimensions (e.g. diameters). In practice it is not possible to measure both small and large samples with one and the same geometrical arrangement of the slits of the sample holder.

Therefore, for the analysis of samples with different thermal diffusivities and/or different sample size, it was mandatory to properly select the geometrical parameters of the measurement arrangement used for "in plane LFA" in each case carefully adapted to the specific measurement. This selection concerns the widths and the lengths of the slits of the sample holder.

A disadvantage of the previously used slit-in-plane sample holder is that for the analysis of samples with different thermal diffusivities and/or different sample sizes, a corresponding plurality of sample holders with differently arranged and/or dimensioned slits is needed, from which a suitable sample holder can be selected before each in-plane LFA and then can be used. CN114577843 A describes a sample holder for LFA having two slits on one side of the sample.

It is an object of the present invention to overcome the aforementioned disadvantage of in-plane sample holders of the type described above and thus, in particular, to reduce the effort required for an in-plane LFA of different samples, in particular samples with different thermal diffusivities and/or sizes.

According to the invention, this object is solved by a sample holder according to claim 1. The dependent claims are directed to further advantageous embodiments of the invention.

The sample holder according to the invention is characterized in that it is designed for enabling
- a change of a length and a width of the two slits defined by the first mask to correspondingly change a length and width of the two rectangular areas on the first side of the sample.

The possibility of changing and thus adjusting a length and/or a width of at least one slit advantageously results in a more universal applicability of the sample holder according to the invention. In particular, the sample holder advantageously enables an analysis of samples with different thermal diffusivities and/or dimensions.

The sample holder is designed for enabling a change of a length and a width of the two first slits (irradiation side). In an embodiment, the sample holder is designed for enabling a change of a length and/or a width of the second slit (detection side). Preferably, both the length and the width of the respective slit can be changed. Each of the slits of the sample holder has an rectangular contour.

When performing an LFA experiment, it is usually advantageous if all the slits of the sample holder have a common (identical) length. Accordingly, it is preferred that the sample holder is designed for enabling the length of all slits to be changed.

The first mask defines two first slits for providing a selective irradiation of two first strip-shaped areas on the first side of the sample, and the second mask defines one second slit for providing a selective detection of radiation emitted from one second strip-shaped area on the second side of the sample, wherein all slits have a rectangular contour and all slits are parallel to each other, i.e. running in a common "longitudinal direction of the slits", wherein the two first slits are spaced apart from each other orthogonally to this longitudinal direction of the slits, and wherein the second slit is located centrally between the two first slits when viewed orthogonally to the longitudinal direction of the slits.

The first mask comprises a first frame member having at least one through opening formed therein, and at least one masking panel interchangeably supported on the first frame member such that the length and/or the width of an aperture of said at least one through opening is changeable by interchanging and/or sliding said at least one of these masking panels.

Each such masking panel serves to define the position of a particular margin of a respective of the slits by partially masking the through opening of the first mask.

The first mask comprises the first frame member having the at least one through opening formed therein, and
- a first pair of masking panels supported oppositely to each other on the first frame member and each slidably adjustable in a direction of a longitudinal axis of the two first slits such that the length of the two first slits is adjustable by sliding these masking panels,
- a second pair of masking panels each supported oppositely to each other on the first frame member and each slidably adjustable orthogonally to the direction of the longitudinal axis of the two first slits such that the width of the two first slits is adjustable by sliding these masking panels.

Each such masking panel may, for example, have a substantially rectangular shape and may have a rectilinear rim to define an associated rectilinear margin of a respective slit.

In an embodiment of the invention, the second mask comprises a second frame member having a central through opening formed therein, and at least one masking panel interchangeably and/or slidably adjustable supported on the second frame member such that the length and/or the width of an aperture of said through opening representing the second slit is changeable by interchanging and/or sliding said at least one masking panel.

Each such masking panel can serve to define the position of a particular margin of the slit by partially masking the through opening of the second mask.

In this case, the second mask can comprise the second frame member having the central through opening formed therein, and
- a first pair of masking panels supported oppositely to each other on the second frame member and each slidably adjustable in a direction of a longitudinal axis of the second slit such that the length of the second slit is adjustable by sliding at least one of these masking panels,
- a second pair of masking panels each supported oppositely to each other on the second frame member and each slidably adjustable orthogonally to the direction of the longitudinal axis of the second slit such that the width of the second slit is adjustable by sliding at least one of these masking panels.

Each such masking panel may, for example, have a substantially rectangular shape and may have a rectilinear rim to define an associated rectilinear margin of the second slit.

The second frame member can have a pair of grooves opposing each other in the direction orthogonal to the sliding direction of one of the first and second pairs of masking panels and each running in the direction of this sliding direction, wherein rims of the masking panels of the respective pair of masking panels opposing each other in the direction orthogonal to the sliding direction engage into the grooves so as to provide a linear guide for sliding of the respective pair of masking panels.

The masking panels of the other one of the first and second pairs of masking panels can each be slidably adjustably clamped between surfaces of the second frame member, on the one hand, and the masking panels guided by the pair of grooves, on the other hand.

The rims of the masking panels that engage in the grooves may be angled by 180° to provide a space between the second frame member and these masking panels, in which the other pair of masking panels can be accommodated (slidably adjustably clamped).

According to a second aspect of the present invention, which can also be combined with the above mentioned first aspect, the above mentioned object is solved by a sample holder Such a sample holder is characterized in that the first mask defines two first slits corresponding to two first strip-shaped areas on the first side of the sample, for providing a selective irradiation of the two first strip-shaped areas, wherein the sample holder is designed for enabling
- a change of a distance between the two first slits to correspondingly change a distance between the two first strip-shaped areas on the first side of the sample.

The first mask comprises a first frame member having at least one through opening formed therein, and a central masking panel interchangeably supported on the first frame member such that a distance between the two first slits is changeable by interchanging the central masking panel.

In an embodiment of the invention, the sample holder further comprises a third frame member having a central through opening formed therein, wherein the third frame member is sandwiched between the first frame member and the second frame member.

The invention further defines a method of laser/light flash analysis according to claim 10 44 , in which a sample holder of the type described herein is used.

Hereinafter, the present invention is further described by way of an exemplary embodiment with reference to the accompanying drawings. In the drawings:
- Fig. 1: shows an exploded perspective view of a sample holder according to an embodiment of the invention,
- Fig. 2: shows another exploded perspective view of the sample holder,
- Fig. 3: shows a top view of the sample holder, on the side of the first mask of the sample holder,
- Fig. 4: shows a top view of the sample holder, on the side of the second mask of the sample holder,
- Fig. 5: shows a side view of the sample holder, and
- Fig. 6: shows a sectional view of the sample holder along line A-A in Fig. 5.

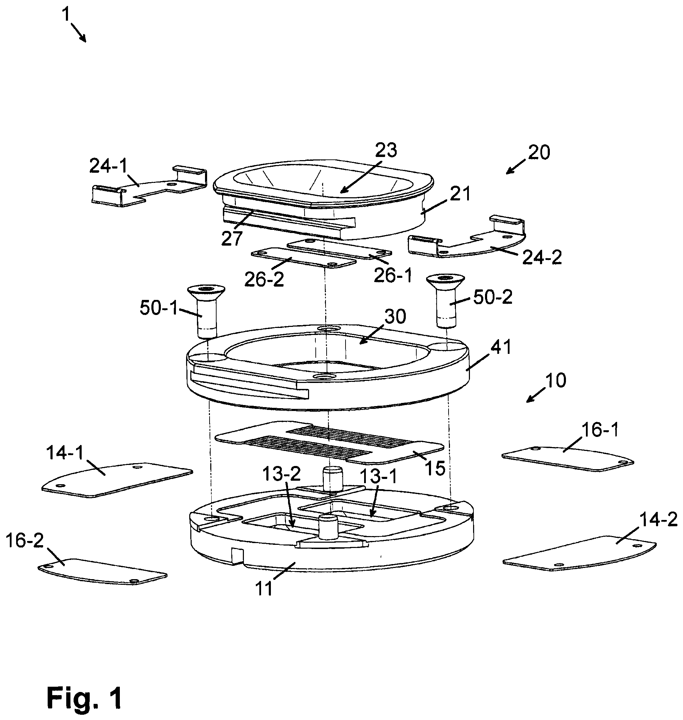

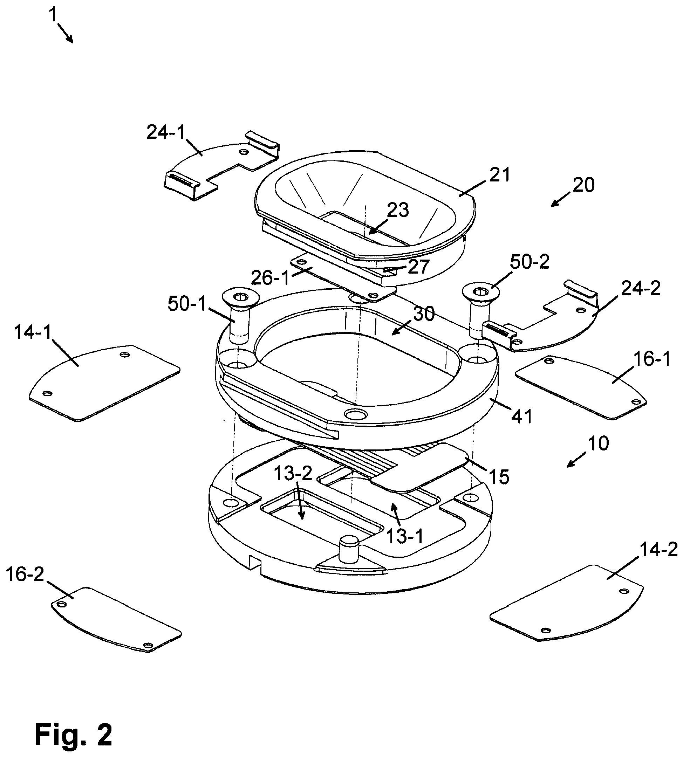

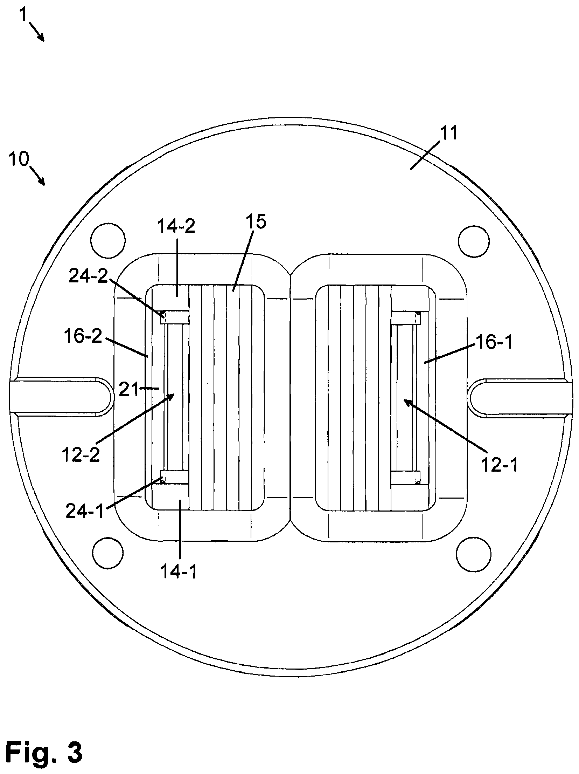

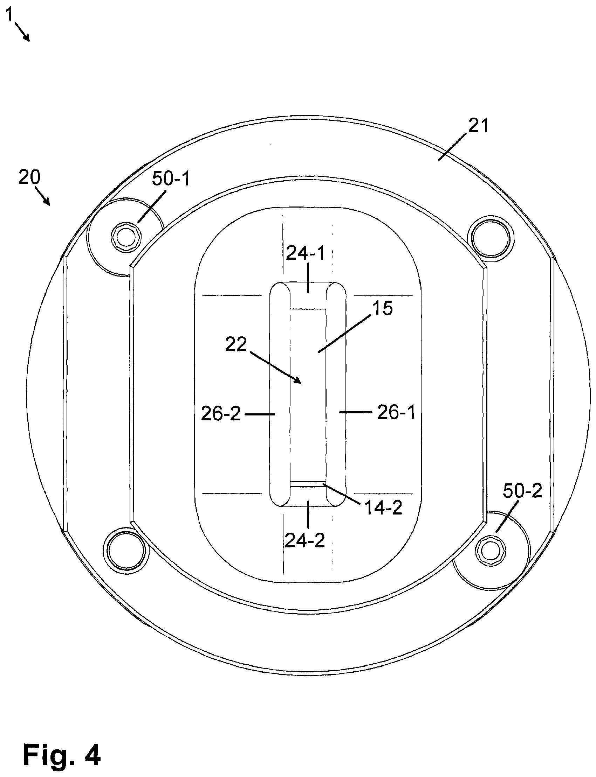

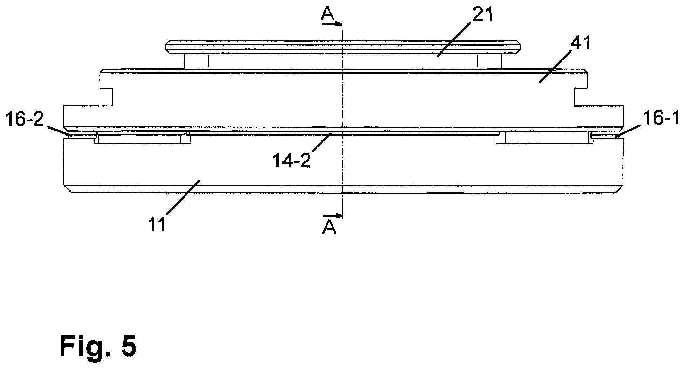

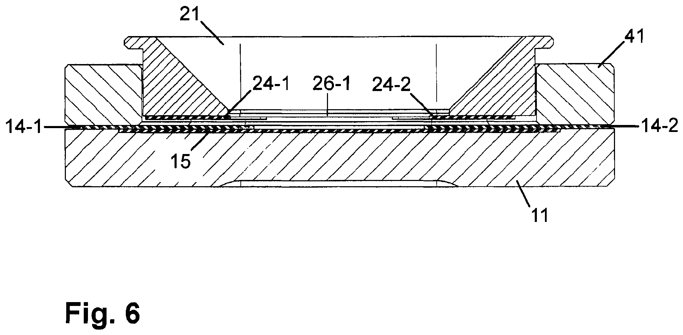

Fig. 1 and 2 are exploded perspective views of a sample holder 1 according to an embodiment of the invention. Fig. 3 and 4 are top views of the assembled sample holder 1, and Fig. 5 and 6 are a side view and a sectional view, respectively, of the assembled sample holder 1.

The sample holder 1 serves for holding a plate-shaped sample (not shown in the figures), which has a first side and a second side opposite to the first side, during an in-plane laser/light flash analysis (in-plane LFA) comprising
- irradiating two first strip-shaped areas on the first side of the sample with an electromagnetic excitation pulse, wherein these two first strip-shaped areas preferably each are provided with an identical rectangular contour (same length, same width), with longitudinal axes of these areas being parallel to one another and these areas having a distance from one another, and
- detecting thermal radiation emitted from a second strip-shaped area on the second side of the sample as a result of the excitation pulse, wherein this second strip-shaped area is provided with a rectangular contour (defined by a length and a width thereof), with a longitudinal axis of this area being parallel to the longitudinal axes of the two first strip-shaped areas and this area being located symmetrically between the two first strip-shaped areas (i.e. the two first strip-shaped areas are symetrically offset with respect to the second strip-shaped area).

To this end, the sample holder 1 comprises
- a first mask 10 provided to face a radiation source during the in-plane LFA and defining two first slits 12-1, 12-2 (see Fig. 3) corresponding to the two first strip-shaped areas on the sample,
- a second mask 20 provided to face a radiation detector during the in-plane LFA and defining a second slit 22 (see Fig. 4) corresponding to the second strip-shaped area on the sample, and
- a receiving space 30 provided between the first mask 10 and the second mask 20 for receiving the sample with its first side facing the first mask 10 and its second side facing the second mask 20.

All of the above mentioned slits 12-1, 12-2, 22 have a respective rectangular contour (defined by a length and a width thereof) and are parallel to each other, i.e. running in a common "longitudinal direction of the slits" 12-1, 12-2, 22, wherein the two first slits 12-1, 12-2 constituted by the first mask 10 are spaced apart from each other orthogonally to this longitudinal direction of the slits, and wherein the second slit 22 constituted by the second mask 20 is located centrally between the first slits 12-1, 12-2 when viewed orthogonally to the longitudinal direction of the slits 12-1, 12-2, 22.

A specific feature of the shown sample holder 1 consists in the fact that it is designed for enabling a change of a length and a width of the two first slits 12-1, 12-2, a change of a length and a width of the second slit 22, and a change of a distance between the two first slits 12-1, 12-2.

Therefore, the sample holder 1 advantageously allows a user to properly adapt (change) the geometrical parameters of the slit arrangement, i.e. above mentioned lengths, widths and distance, for use in a respective "in plane LFA", so that for example
- a measurement time in the LFA lies within a desired range, for example is at least 10 ms, in particular at least 50 ms, and/or is maximal 500 ms, in particular maximal 200 ms, and
- a desired trade-off is achieved between, on the one hand, a high accuracy (good determination) of the parameters of the in-plane LFA, in particular the distance between the first two areas (irradiation areas) on the sample, and, on the other hand, a high signal-to-noise ratio (SNR) when detecting the thermal radiation.

To this end, in the shown example the first mask 10 comprises a first frame member 11 having two through openings 13-1, 13-2 formed therein, and five masking panels 14-1, 14-2, 16-1, 16-2, 15, wherein the "lateral" masking panels 14-1, 14-2, 16-1, 16-2 are slidably adjustable supported on the first frame member 11, and wherein the "central" masking panel 15 is interchangeably supported on the first frame member 11.

By means of the provision of these masking panels 14-1, 14-2, 16-1, 16-2, 15 the length and the width and the mutual distance of apertures of said two through openings 13-1, 13-2 representing the two first slits 12-1, 12-2 is changeable by interchanging the masking panel 15 and/or sliding at least one of the masking panels 14-1, 14-2, 16-1, 16-2.

The first frame member 11 as well as the masking panels 14-1, 14-2, 16-1, 16-2, 15 are made of a material that is opaque to the radiation used, preferably e.g. a metal material. In the example shown, these masking panels have a thickness of about 1 mm.

The term "aperture" in this context refers to that opening area of the respective opening of the first frame member 11 that remains open, i.e. transmissive for the radiation used, depending on the masking by the masking panels 14-1, 14-2, 16-1, 16-2, 15 and corresponding to the positions of the panels 14-1, 14-2, 16-1, 16-2 adjusted by the user and the panel 15 used, which was selected by the user.

The masking panels 14-1, 14-2, 16-1, 16-2, 15 comprise a first pair of masking panels 14-1, 14-2 supported oppositely to each other on the first frame member 11 and each slidably adjustable in a direction of a longitudinal axis of the two first slits 12-1, 12-2 such that the length of the first slits 12-1, 12-2 is adjustable by sliding at least one of these masking panels 14-1, 14-2, and a second pair of masking panels 16-1, 16-2 each supported oppositely to each other on the first frame member 11 and each slidably adjustable orthogonally to the direction of the longitudinal axis of the first slits 12-1, 12-2 such that the width of the first slits 12-1, 12-2 is adjustable by sliding at least one of these masking panels 16-1, 16-2.

The interchangeable central masking panel 15 used in the sample holder 1 when performing the in-plane LFA is one that has been previously selected by a user from a "set of masking panels 15" belonging to the sample holder 1. This set consists of a plurality of different masking panels 15 that differ from each other in the width of their central area.

In the framework of the invention, such a set may comprise, for example, at least 3, in particular at least 5 different central masking panels 15, wherein the widths of these masking panels 15 may cover, for example, evenly distributed a predetermined width range (e.g. in steps of 1 or 2 mm).

In the example shown, the set consists of eight such central masking panels 15 with different widths of their central area. In order to illustrate this feature in the figures, the "component 15" is shown in the figures in a "combination representation", i.e. showing all eight different component widths at once.

The central masking panel 15 to be used for the in-plane LFA and thus installed in the sample holder 1 determines the mutual distance between inner margins of the two first slits 12-1, 12-2. As can be seen from the figures, the respective masking panel 15 is held form-fittingly in a corresponding recess on the (in Figs. 1 and 2 upper) flat side of the first frame member 11. Besides, in deviation from the shown example, instead of the two through openings 13-1, 13-2, only one central through opening could be provided.

The positions of outer margins of the two first slits 12-1, 12-2 and thus the widths of these slits 12-1, 12-2 are determined by the sliding positions of the second pair of masking panels 16-1, 16-2. As can be seen from the figures, these masking panels 16-1, 16-2 are slidably guided in corresponding recesses on the same flat side of the first frame member 11.

Therefore, the specific selection of the central masking panel 15 in conjunction with the specific selection of the positions of the masking panels 16-1, 16-2 determines the distance of the slits 12-1, 12-2 from each other as well as their respective widths.

The positions of the longitudinal ends (margins) of both first slits 12-1, 12-2 and thus the (identical) lengths of these slits 12-1, 12-2 are determined by the sliding positions of the first pair of masking panels 14-1, 14-2. As can be seen from the figures, these masking panels 14-1, 14-2 are slidably guided in corresponding recesses on said flat side of the first frame member 11.

Each of the above mentioned recesses has two rectilinear and parallel borders on which corresponding rectilinear and parallel rims of the associated masking panel are guided.

The depths of the aforementioned three recesses (for panel 15, for panels 16-1, 16-2, and for panels 14-1, 14-2) on the upper flat side of the frame member 11 are dimensioned differently from each other in such a way that the central masking panel 15 does not obstruct the sliding movement of the other panels 14-1, 14-2, 16-1, 16-2, nor do the sliding movements of the other panels 14-1, 14-2, 16-1, 16-2 obstruct each other.

In other words, there is a design which is generally advantageous in the framework of the invention, in which the panel 15, the panels 16-1, 16-2, and the panels 14-1, 14-2 are arranged at their own respective vertical "levels" in order to avoid the aforementioned obstructions. It is preferred that the vertical distance between two adjacent levels corresponds to the respective thickness of the respective panel(s), such that in the assembled state of the sample holder 1, masking panels arranged on adjacent levels are in contact with each other.

In the shown example, the level provided for the panel 15 is the lowest (deepest recess), followed by the level provided for the panels 16-1, 16-2 (medium-deep recess), and the level provided for panels 14-1, 14-2 is the highest (relatively shallow recess).

The second mask 20, as explained hereinafter, is basically similar in design and function to the first mask 10, but constitutes only one second slit 22, in contrast to the first mask 10, which constitutes two first slits 12-1, 12-2.

The second mask 20 comprises a second frame member 21 having a central through opening 23 formed therein, and four masking panels 24-1, 24-2, 26-1, 26-2 slidably adjustable supported on the second frame member 21 such that the length and the width of an aperture of said through opening 23 representing the second slit 22 is changeable by sliding said masking panels 24-1, 24-2, 26-1, 26-2.

The term "aperture" in this context refers to that opening area of the opening of the second frame member 21 that remains open depending on the masking by the masking panels 24-1, 24-2, 26-1, 26-2 corresponding to the positions of the panels 24-1, 24-2, 26-1, 26-2 adjusted by the user. The second frame member 21 as well as the masking panels 24-1, 24-2, 26-1, 26-2 are made of a material that is opaque to the radiation used, preferably e.g. a metal material. In the example shown, these masking panels have a thickness of about 1 mm.

The masking panels 24-1, 24-2, 26-1, 26-2 comprise a first pair of masking panels 24-1, 24-2 supported oppositely to each other on the second frame member 21 and each slidably adjustable in a direction of a longitudinal axis of the second slit 22 such that the length of the second slit 22 is adjustable by sliding at least one of these masking panels 24-1, 24-2, and a second pair of masking panels 26-1, 26-2 each supported oppositely to each other on the second frame member 21 and each slidably adjustable orthogonally to the direction of the longitudinal axis of the second slit 22 such that the width of the second slit 22 is adjustable by sliding at least one of these masking panels 26-1, 26-2.

The second frame member 21 has a pair of grooves 27 opposing each other in the direction orthogonal to the sliding direction of the masking panels 24-1, 24-2 and each running in the direction of this sliding direction, wherein rims of the masking panels 24-1, 24-2 opposing each other in the direction orthogonal to the sliding direction engage into the grooves 27 so as to provide a linear guide for sliding of the masking panels 24-1, 24-2.

In the example shown, the rims of the masking panels 24-1, 24-2 that engage in the grooves 27 are angled by 180°, as can be seen in Fig.1 and 2.

The masking panels 26-1, 26-2 each are slidably adjustably clamped (in vertical direction) between surfaces of the second frame member 21, on the one hand, and the masking panels 24-1, 24-2 guided by the pair of grooves 27, on the other hand.

Therefore, the specific selection of the positions of the masking panels 24-1, 24-2, 26-1, 26-2 determines the length and the width of the second slit 22 constituted by the second mask 20.

By means of the above explained "clamping arrangement", there is realised a design, which is generally advantageous in the framework of the invention, in which the masking panels 24-1, 24-2 and the masking panels 26-1, 26-2 are arranged at their own respective vertical "levels" in such a way that the sliding movements of the panels 24-1, 24-2 is not obstructed by the arrangement of the panels 26-1, 26-2 and the sliding movements of the panels 26-1, 26-2 is not obstructed by the arrangement of the panels 24-1, 24-2. In the shown example, the level provided for the panels 26-1, 26-2 is the highest, followed by the level provided for the panels 24-1, 24-2.

In the shown example, the sample holder 1 further comprises a third frame member 41 having a central through opening formed therein, wherein the third frame member 41 is sandwiched (interposed) between the first frame member 11 and the second frame member 21. The central through opening of the third frame member 41 constitues the receiving space 30 for accommodating the (not shown) sample between the first mask 10 and the second mask 20.

In the shown example, the sample holder 1 further comprises means for holding together the third frame member 41 and the first mask 10 (i.e. the first frame member 11 and the masking panels 14-1, 14-2, 16-1, 16-2, 15).

In the example, these means are configured as a screw connection (here: two screws 50-1, 50-2), with which the third frame member 41 is vertically fastened to the first frame member 11 and thereby pushed against the first frame member 11. As long as the screws 50-1, 50-2 are not tightened, the panels 14-1, 14-2, 16-1, 16-2 located between members 41 and 11 can still be moved. Once the panels 14-1, 14-2, 16-1, 16-2 have been adjusted as desired, the screws 50-1, 50-2 can be tightened and the panels 14-1, 14-2, 16-1, 16-2 thus fixed in their adjusted positions.

As can be seen in particular in Figs. 1 and 2, the members 11 and 41 can be centred in relation to each other by means of a pin and hole arrangement. In the example, member 11 is equipped with two pins and member 41 with two correspondingly positioned and dimensioned openings.

In the example shown, all the masking panels to be slid, i.e. the panels 14-1, 14-2, 16-1, 16-2, 24-1, 24-2, 26-1, 26-2 are equipped with means, here a pair of (small) openings in each case, at which a tool can be conveniently brought into engagement for adjusting the positions of these panels within the sample holder 1.

In the shown example, the second mask 20, formed by the second frame member 21 with the panels 24-1, 24-2, 26-1, 26-2 rests loosely merely due to gravity on the remaining components of the sample holder 1, in the example on the third frame member 41. Particular means for holding the components of the second mask 20 together and for fixing the respective panels 24-1, 24-2, 26-1, 26-2 in their adjusted positions (as with the first mask 10) are not required in the shown example of the second mask 20. These components are already sufficiently held together and fixed by the "clamping" of the panels 26-1, 26-2 between the second frame member 21 and the panels 24-1, 24-2 as described above.

The loose support of the second mask 20 has the particular advantage that, in the situation of use, first of all the first mask 10 together with the third frame member 41 (with or without the sample) can be inserted into a respective measuring device, then the sample can be inserted into the receiving space of the third frame member 41 (if not already present), and finally the second mask 20 can be placed on in order to complete the sample holder 1.

In summary, the present invention and the described sample holder 1 can be advantageously used in a method of in-plane laser/light flash analysis (in-plane LFA) of a sample comprising the steps of irradiating a first side of the sample with an electromagnetic excitation pulse, detecting thermal radiation emitted as a result of the excitation pulse from a second side of the sample opposite the first side, and evaluating the detected thermal radiation.

In a method of in-plane LFA according to the invention, such an evaluation can for example be based on a physical-mathematical model in order to determine the thermal diffusivity of the sample and/or other parameters of the sample material. In particular, as far as the heat transfer in the sample is effected by heat conduction, such a model can take into account the heat transfer equation with the corresponding initial and boundary conditions.

Advantageously, the sample holder according to the invention can be used for the measurement of isotropic and anisotropic in-plane thermal diffusivity with the flash method. For example, rotating the sample by 90° and maintaining the same orientation of the slits allows selecting either of two orthogonal directions of the heat flow, and thus allows to measure anisotropic thermal diffusivity, provided the latter differs along two orthogonal axes within the plane.

Due to the adjustability of the slits provided in the invention, preferably the lengths and the widths of all slits as well as the distance between two first slits, different sample materials (e.g. with different thermal diffusivities) and different sample geometries (e.g. large and small samples) can advantageously be examined by the in-plane LFA.

In the method of in-plane LFA according to the invention, the excitation pulse can be generated for example by means of a pulsed flash lamp or a pulsed laser, for example within a wavelength range of 100 nm to 5 µm.

During irradiation with the excitation pulse and detection of the emitted thermal radiation, the sample holder and thus the sample is preferably arranged in a temperature-controlled sample chamber (e.g. furnace chamber), which is purged with a purge gas such as nitrogen, helium or argon (or a mixture thereof). Alternatively, the LFA can be performed for example under vacuum or in air.

The detection of the emitted thermal radiation can be performed by means of an infrared detector.

A device for performing such a laser/light flash analysis of a sample can comprise: an excitation source for irradiating the first side of the sample with the electromagnetic excitation pulse; a detector for detecting the thermal radiation emitted from the second side of the sample; and an evaluation device (e.g. software-controlled device) which is adapted to perform an evaluation of the detected thermal radiation, for example based on a physical-mathematical model as mentioned above.

In such an evaluation, a mathematical compensation calculation may be carried out by means of the evaluation device in order to estimate one or more material parameters of the sample as e.g. thermal diffusivity of the sample material. In the mathematical compensation calculation, the model parameters used in the model (and representing physical properties of the sample, e.g. thermal diffusivity of the sample material) are adjusted such that the curve of the intensity of the detected thermal radiation defined by the model is matched as precisely as possible to the actually measured curve.

### List of reference signs:

- 1: sample holder
- 10: first mask
- 11: first frame member
- 12-1, 12-2: first slits
- 13-1, 13-2: through holes
- 14-1, 14-2: masking panels
- 16-1, 16-2: masking panels
- 20: second mask
- 21: second frame member
- 22: second slit
- 23: through hole
- 24-1, 24-2: masking panels
- 26-1, 26-2: masking panels
- 27: grooves
- 30: receiving space
- 41: third frame member
- 50-1, 50-2: screws

## Claims

1. A sample holder (1) for holding a plate-shaped sample during a laser/light flash analysis of the sample, wherein the sample has a first side and a second side opposite to the first side, and wherein the laser/light flash analysis comprises
- irradiating two first rectangular areas on the first side of the sample with an electromagnetic excitation pulse from a radiation source,
- detecting thermal radiation emitted from a second rectangular area on the second side of the sample as a result of the excitation pulse by means of a radiation detector, wherein a longitudinal axis of the second rectangular area is parallel to a longitudinal axis of the two first rectangular areas and offset orthogonally to the direction of the longitudinal axis of the two first rectangular areas,
wherein the sample holder (1) comprises
- a first mask (10) provided to face the radiation source during the laser/light flash analysis and adapted to define two first slits (12-1, 12-2) corresponding to the two first rectangular areas on the first side of the sample,
- a second mask (20) provided to face the radiation detector during the laser/light flash analysis and adapted to define a second slit (22) corresponding to the second rectangular area on the second side of the sample, and
- a receiving space (30) provided between the first mask (10) and the second mask (20) adapted to receive the sample with the first side facing the first mask (10) and the second side facing the second mask (20),
**characterized in that** the sample holder (1) is adapted to enable
- a change of a length and a width of the two first slits (12-1, 12-2) defined by the first mask (10) to correspondingly change a length and a width of the two first rectangular areas on the first side of the sample,
wherein the first mask (10) comprises
- a first frame member (11) having at least one through opening (13-1, 13-2) formed therein,
- a first pair of masking panels (14-1, 14-2) supported oppositely to each other on the first frame member (11) and each slidably adjustable in a direction of a longitudinal axis of the two first slits (12-1, 12-2) such that the length of the two first slits (12-1, 12-2) is adjustable by sliding these masking panels (14-1, 14-2), wherein these masking panels (14-1, 14-2) are guided in corresponding recesses on a flat side of the first frame member (11),
- a second pair of masking panels (16-1, 16-2) each supported oppositely to each other on the first frame member (11) and each slidably adjustable orthogonally to the direction of the longitudinal axis of the two first slits (12-1, 12-2) such that the width of the two first slits (12-1, 12-2) is adjustable by sliding these masking panels (16-1, 16-2), wherein these masking panels (16-1, 16-2) are guided in corresponding recesses on said flat side of the first frame member (11), and
- a central masking panel (15) interchangeably supported on the first frame member (11) such that a distance between the two first slits (12-1, 12-2) is changeable by interchanging the central masking panel (15).

2. The sample holder (1) according to claim 1, wherein the central masking panel (15) is interchangeably held form-fittingly in a corresponding recess on said flat side of the first frame member (11).

3. The sample holder (1) according to claim 2, wherein the central masking panel (15), the first pair of masking panels (14-1, 14-2) and the second pair of masking panels (16-1, 16-2) each are arranged at their own respective levels on said flat side, and wherein the vertical distance between two adjacent levels corresponds to the respective thickness of the respective panel or panels (15; 14-1, 14-2; 16-1, 16-2), such that in an assembled state of the sample holder (1), the masking panels (15; 14-1, 14-2; 16-1, 16-2) arranged on adjacent levels are in contact with each other.

4. The sample holder (1) according to any of claims 1 to 3, wherein the sample holder (1) is further adapted to enable
- a change of a length and/or a width of the second slit (22) defined by the second mask (20) to correspondingly change a length and/or a width of the second rectangular area on the second side of the sample,
wherein the second mask (20) comprises a second frame member (21) having a central through opening (23) formed therein, and at least one masking panel (24-1, 24-2, 26-1, 26-2) interchangeably and/or slidably adjustable supported on the second frame member (21) such that the length and/or the width of an aperture of said through opening (23) representing the second slit (22) is changeable by interchanging and/or sliding said at least one masking panel (24-1, 24-2, 26-1, 26-2).

5. The sample holder (1) according to claim 4, wherein the second mask (20) comprises
- a first pair of masking panels (24-1, 24-2) supported oppositely to each other on the second frame member (21) and each slidably adjustable in a direction of a longitudinal axis of the second slit (22) such that the length of the second slit (22) is adjustable by sliding at least one of these masking panels (24-1, 24-2),
- a second pair of masking panels (26-1, 26-2) each supported oppositely to each other on the second frame member (21) and each slidably adjustable orthogonally to the direction of the longitudinal axis of the second slit (22) such that the width of the second slit (22) is adjustable by sliding at least one of these masking panels (26-1, 26-2).

6. The sample holder (1) according to claim 5, wherein the second frame member (21) has a pair of grooves (27) opposing each other in the direction orthogonal to the sliding direction of one (24-1, 24-2) of the first and second pairs of masking panels (24-1, 24-2, 26-1, 26-2) and each running in the direction of this sliding direction, wherein rims of the masking panels of the respective pair of masking panels (24-1, 24-2) opposing each other in the direction orthogonal to the sliding direction engage into the grooves (27) so as to provide a linear guide for sliding of the respective pair of masking panels (24-1, 24-2).

7. The sample holder (1) according to claim 6, wherein the masking panels of the other one (26-1, 26-2) of the first and second pairs of masking panels (24-1, 24-2, 26-1, 26-2) each are slidably adjustably clamped between surfaces of the second frame member (21), on the one hand, and the masking panels (24-1, 24-2) guided by the pair of grooves (27), on the other hand.

8. The sample holder (1) according to any of claims 4 to 7, further comprising
- a third frame member (41) having a central through opening (23) formed therein and constituting the receiving space (30) for accommodating the sample, wherein the third frame member (41) is sandwiched between the first frame member (11) and the second frame member (21).

9. The sample holder (1) according to claim 8, further comprising
- means for holding together the third frame member (41) and the first mask (10).

10. A method of laser/light flash analysis of a plate-shaped sample, comprising
- irradiating two first rectangular areas on a first side of the sample with an electromagnetic excitation pulse from a radiation source,
- detecting thermal radiation emitted from a second rectangular area on a second side of the sample opposite to the first side as a result of the excitation pulse by means of a radiation detector, wherein a longitudinal axis of the second rectangular area is parallel to a longitudinal axis of the two first rectangular areas but offset orthogonally to the direction of the longitudinal axis of the two first rectangular areas,
wherein the sample is held in a sample holder (1) according to any one of the preceding claims.

## Patentansprüche

1. Probenhalter (1) zum Halten einer plattenförmigen Probe während einer Laser-/Lichtblitzanalyse der Probe, wobei die Probe eine erste Seite und eine zweite Seite gegenüber der ersten Seite aufweist und wobei die Laser-/Lichtblitzanalyse umfasst:
- Bestrahlen von zwei ersten rechteckigen Bereichen auf der ersten Seite der Probe mit einem elektromagnetischen Anregungsimpuls aus einer Strahlungsquelle,
- Erfassen von Wärmestrahlung, die von einem zweiten rechteckigen Bereich auf der zweiten Seite der Probe als Ergebnis des Anregungsimpulses emittiert wird, mittels eines Strahlungsdetektors, wobei eine Längsachse des zweiten rechteckigen Bereichs parallel zu einer Längsachse der zwei ersten rechteckigen Bereiche und orthogonal zu der Richtung der Längsachse der zwei ersten rechteckigen Bereiche versetzt ist,
wobei der Probenhalter (1) umfasst:
- eine erste Maske (10), die vorgesehen ist, um während der Laser-/Lichtblitzanalyse der Strahlungsquelle zugewandt zu sein, und die ausgelegt ist, um zwei erste Schlitze (12-1, 12-2) zu definieren, die den zwei ersten rechteckigen Bereichen auf der ersten Seite der Probe entsprechen,
- eine zweite Maske (20), die vorgesehen ist, um während der Laser-/Lichtblitzanalyse dem Strahlungsdetektor zugewandt zu sein, und die ausgelegt ist, um einen zweiten Schlitz (22) zu definieren, der dem zweiten rechteckigen Bereich auf der zweiten Seite der Probe entspricht, und
- einen Aufnahmeraum (30), der zwischen der ersten Maske (10) und der zweiten Maske (20) vorgesehen ist, ausgelegt, um die Probe mit der ersten Seite, die der ersten Maske (10) zugewandt ist, und der zweiten Seite, die der zweiten Maske (20) zugewandt ist, aufzunehmen,
**dadurch gekennzeichnet, dass** der Probenhalter (1) ausgelegt ist, um zu ermöglichen:
- eine Änderung einer Länge und einer Breite der zwei ersten Schlitze (12-1, 12-2), die durch die erste Maske (10) definiert sind, um eine Länge und eine Breite der zwei ersten rechteckigen Bereiche auf der ersten Seite der Probe entsprechend zu ändern, wobei die erste Maske (10) umfasst:
- ein erstes Rahmenelement (11) mit mindestens einer darin gebildeten Durchgangsöffnung (13-1, 13-2),
- ein erstes Paar Maskierungsplatten (14-1, 14-2), die einander gegenüberliegend auf dem ersten Rahmenelement (11) getragen sind und jeweils in einer Richtung einer Längsachse der zwei ersten Schlitze (12-1, 12-2) derart verschiebbar einstellbar sind, dass die Länge der zwei ersten Schlitze (12-1, 12-2) durch Verschieben dieser Maskierungsplatten (14-1, 14-2) einstellbar ist, wobei diese Maskierungsplatten (14-1, 14-2) in entsprechenden Aussparungen auf einer flachen Seite des ersten Rahmenelements (11) geführt sind,
- ein zweites Paar Maskierungsplatten (16-1, 16-2), die jeweils einander gegenüberliegend auf dem ersten Rahmenelement (11) getragen sind und jeweils orthogonal zu der Richtung der Längsachse der zwei ersten Schlitze (12-1, 12-2) derart verschiebbar einstellbar sind, dass die Breite der zwei ersten Schlitze (12-1, 12-2) durch Verschieben dieser Maskierungsplatten (16-1, 16-2) einstellbar ist, wobei diese Maskierungsplatten (16-1, 16-2) in entsprechenden Aussparungen auf der flachen Seite des ersten Rahmenelements (11) geführt sind, und
- eine zentrale Maskierungsplatte (15), die austauschbar auf dem ersten Rahmenelement (11) getragen ist, so dass ein Abstand zwischen den zwei ersten Schlitzen (12-1, 12-2) durch Austauschen der zentralen Maskierungsplatte (15) veränderbar ist.

2. Probenhalter (1) nach Anspruch 1, wobei die zentrale Maskierungsplatte (15) austauschbar formschlüssig in einer entsprechenden Aussparung auf der flachen Seite des ersten Rahmenelements (11) gehalten ist.

3. Probenhalter (1) nach Anspruch 2, wobei die zentrale Maskierungsplatte (15), das erste Paar Maskierungsplatten (14-1, 14-2) und das zweite Paar Maskierungsplatten (16-1, 16-2) jeweils auf ihrer eigenen Ebene auf der flachen Seite angeordnet sind und wobei der vertikale Abstand zwischen zwei benachbarten Ebenen der jeweiligen Dicke der jeweiligen Platte oder Platten entspricht (15; 14-1, 14-2; 16-1, 16-2), so dass in einem zusammengebauten Zustand des Probenhalters (1) die Maskierungsplatten (15; 14-1, 14-2; 16-1, 16-2), die auf benachbarten Ebenen angeordnet sind, miteinander in Kontakt stehen.

4. Probenhalter (1) nach Anspruch 1 bis 3, wobei der Probenhalter (1) ferner ausgelegt ist, zu ermöglichen:
- eine Änderung einer Länge und/oder einer Breite des zweiten Schlitzes (22), der durch die zweite Maske (20) definiert ist, um eine Länge und/oder eine Breite des zweiten rechteckigen Bereichs auf der zweiten Seite der Probe entsprechend zu ändern,
wobei die zweite Maske (20) ein zweites Rahmenelement (21) mit einer darin gebildeten zentralen Durchgangsöffnung (23) und mindestens eine Maskierungsplatte (24-1, 24-2, 26-1, 26-2) umfasst, die austauschbar und/oder derart verschiebbar einstellbar auf dem zweiten Rahmenelement (21) getragen sind, dass die Länge und/oder die Breite einer Apertur der Durchgangsöffnung (23), die den zweiten Schlitz (22) darstellt, durch Austauschen und/oder Verschieben der mindestens einen Maskierungsplatte (24-1, 24-2, 26-1, 26-2) veränderbar ist.

5. Probenhalter (1) nach Anspruch 4, wobei die zweite Maske (20) umfasst:
- ein erstes Paar Maskierungsplatten (24-1, 24-2), die einander gegenüberliegend auf dem zweiten Rahmenelement (21) getragen sind und jeweils in einer Richtung einer Längsachse des zweiten Schlitzes (22) derart verschiebbar einstellbar sind, dass die Länge des zweiten Schlitzes (22) durch Verschieben mindestens einer dieser Maskierungsplatten (24-1, 24-2) einstellbar ist,
- ein zweites Paar Maskierungsplatten (26-1, 26-2), die jeweils gegenüberliegend auf dem zweiten Rahmenelement (21) getragen sind und jeweils orthogonal zu der Richtung der Längsachse des zweiten Schlitzes (22) derart verschiebbar einstellbar sind, dass die Breite des zweiten Schlitzes (22) durch Verschieben mindestens einer dieser Maskierungsplatten (26-1, 26-2) einstellbar ist.

6. Probenhalter (1) nach Anspruch 5, wobei das zweite Rahmenelement (21) ein Paar Nuten (27) aufweist, die einander in der Richtung orthogonal zu der Verschiebungsrichtung eines (24-1, 24-2) von dem ersten und dem zweiten Paar Maskierungsplatten (24-1, 24-2, 26-1, 26-2) gegenüberliegen und jeweils in der Richtung dieser Verschiebungsrichtung verlaufen, wobei Ränder der Maskierungsplatten des jeweiligen Paares Maskierungsplatten (24-1, 24-2), die einander in der Richtung orthogonal zu der Verschiebungsrichtung gegenüberliegen, in die Nuten (27) eingreifen, um eine lineare Führung zum Verschieben des jeweiligen Paares Maskierungsplatten (24-1, 24-2) bereitzustellen.

7. Probenhalter (1) nach Anspruch 6, wobei die Maskierungsplatten des anderen (26-1, 26-2) von dem ersten und zweiten Paar Maskierungsplatten (24-1, 24-2, 26-1, 26-2) jeweils verschiebbar einstellbar zwischen Flächen des zweiten Rahmenelements (21) einerseits und den Maskierungsplatten (24-1, 24-2), die durch das Paar Nuten (27) geführt sind, andererseits geklemmt sind.

8. Probenhalter (1) nach einem der Ansprüche 4 bis 7, ferner umfassend
- ein drittes Rahmenelement (41), das eine darin gebildete zentrale Durchgangsöffnung (23) aufweist und den Aufnahmeraum (30) zum Unterbringen der Probe bildet, wobei das dritte Rahmenelement (41) sandwichartig zwischen dem ersten Rahmenelement (11) und dem zweiten Rahmenelement (21) angeordnet ist.

9. Probenhalter (1) nach Anspruch 8, ferner umfassend
- Mittel zum Zusammenhalten des dritten Rahmenelements (41) und der ersten Maske (10).

10. Verfahren zur Laser-/Lichtblitzanalyse einer plattenförmigen Probe, umfassend
- Bestrahlen von zwei ersten rechteckigen Bereichen auf einer ersten Seite der Probe mit einem elektromagnetischen Anregungsimpuls aus einer Strahlungsquelle,
- Erfassen von Wärmestrahlung, die von einem zweiten rechteckigen Bereich auf einer zweiten Seite der Probe gegenüber der ersten Seite als Ergebnis des Anregungsimpulses emittiert wird, mittels eines Strahlungsdetektors, wobei eine Längsachse des zweiten rechteckigen Bereichs parallel zu einer Längsachse der zwei ersten rechteckigen Bereiche, jedoch orthogonal zu der Richtung der Längsachse der zwei ersten rechteckigen Bereiche versetzt ist,
wobei die Probe in einem Probenhalter (1) nach einem der vorhergehenden Ansprüche gehalten wird.

## Revendications

1. Porte-échantillon (1) destiné à maintenir un échantillon en forme de plaque pendant une analyse de lumière/de flash laser de l'échantillon, l'échantillon présentant une première face et une second face opposée à la première face, et l'analyse de lumière/de flash laser comprenant les étapes consistant à
- irradier deux premières zones rectangulaires de la première face de l'échantillon avec une impulsion d'excitation électromagnétique provenant d'une source de rayonnement,
- détecter le rayonnement thermique émis par une seconde zone rectangulaire sur le second face de l'échantillon à la suite de l'impulsion d'excitation au moyen d'un détecteur de rayonnement, un axe longitudinal de la seconde zone rectangulaire étant parallèle à un axe longitudinal des deux premières zones rectangulaires et décalé orthogonalement par rapport à la direction de l'axe longitudinal des deux premières zones rectangulaires,
le porte-échantillon (1) comprenant
- un premier masque (10) prévu pour faire face à la source de rayonnement lors de l'analyse de lumière/de flash laser et adapté pour définir deux premières fentes (12-1, 12-2) correspondant aux deux premières zones rectangulaires sur la première face de l'échantillon,
- un second masque (20) prévu pour faire face au détecteur de rayonnement lors de l'analyse de lumière/de flash laser et adapté pour définir une seconde fente (22) correspondant à la seconde zone rectangulaire sur la seconde face de l'échantillon, et
- un espace de réception (30) ménagé entre le premier masque (10) et le second masque (20), adapté pour recevoir l'échantillon, la première face faisant face au premier masque (10) et la seconde face faisant face au second masque (20),
**caractérisé en ce que** le porte-échantillon (1) est adapté pour permettre
- une modification de la longueur et de la largeur des deux premières fentes (12-1, 12-2) définies par le premier masque (10) pour modifier de manière correspondante la longueur et la largeur des deux premières zones rectangulaires sur la première face de l'échantillon, le premier masque (10) comprenant
- un premier élément cadre (11) dans lequel est formée au moins une ouverture traversante (13-1, 13-2),
- une première paire de panneaux de masquage (14-1, 14-2) supportés en opposition l'un par rapport à l'autre sur le premier élément cadre (11) et réglables chacun de manière coulissante dans la direction d'un axe longitudinal des deux premières fentes (12-1, 12-2) de telle sorte que la longueur des deux premières fentes (12-1, 12-2) soit réglable par coulissement de ces panneaux de masquage (14-1, 14-2), ces panneaux de masquage (14-1,14-2) étant guidés dans des évidements correspondants sur une face plate du premier élément cadre (11),
- une seconde paire de panneaux de masquage (16-1, 16-2) supportés chacun en opposition l'un par rapport à l'autre sur le premier élément cadre (11) et réglables chacun de manière coulissante orthogonale à la direction de l'axe longitudinal des deux premières fentes (12-1, 12-2) de sorte que la largeur des deux premières fentes (12-1, 12-2) soit réglable par coulissement de ces panneaux de masquage (16-1, 16-2), ces panneaux de masquage (16-1, 16-2) étant guidés dans des évidements correspondants sur ladite face plate du premier élément cadre (11), et
- un panneau de masquage central (15) supporté de manière interchangeable sur le premier élément cadre (11) de sorte qu'une distance entre les deux premières fentes (12-1, 12-2) puisse être modifiée par échange du panneau de masquage central (15).

2. Porte-échantillon (1) selon la revendication 1, dans lequel le panneau de masquage central (15) est maintenu de manière interchangeable par ajustement de forme dans un évidement correspondant sur ladite face plate du premier élément cadre (11).

3. Porte-échantillon (1) selon la revendication 2, dans lequel le panneau de masquage central (15), la première paire de panneaux de masquage (14-1, 14-2) et la seconde paire de panneaux de masquage (16-1, 16-2) sont chacun agencés à leurs propres niveaux respectifs sur ladite face plate, et la distance verticale entre deux niveaux adjacents correspondant à l'épaisseur respective du ou des panneaux respectifs (15 ; 14-1, 14-2 ; 16-1, 16-2), de telle sorte que, dans un état assemblé de l'échantillon (1), les panneaux de masquage (15 ; 14-1, 14-2 ; 16-1,16-2) disposés sur des niveaux adjacents soient en contact les uns avec les autres.

4. Porte-échantillon (1) selon l'une quelconque des revendications 1 à 3, dans lequel le porte-échantillon (1) est en outre adapté pour permettre
- une modification de la longueur et/ou de la largeur de la seconde fente (22) définie par le second masque (20) pour modifier en conséquence la longueur et/ou la largeur de la seconde zone rectangulaire sur la seconde face de l'échantillon,
le second masque (20) comprenant un deuxième élément cadre (21) dans lequel est formée une ouverture traversante centrale (23), et au moins un panneau de masquage (24-1, 24-2, 26-1, 26-2) réglable de manière interchangeable et/ou coulissante, supporté par le deuxième élément cadre (21) de sorte que la longueur et/ou la largeur d'une ouverture de ladite ouverture traversante (23) représentant la seconde fente (22) peut être changée et/ou amenée à glisser par échange et/ou glissement dudit au moins un panneau de masquage (24-1, 24-2, 26-1, 26-2).

5. Porte-échantillon (1) selon la revendication 4, dans lequel le second masque (20) comprend
- une première paire de panneaux de masquage (24-1, 24-2) supportés en opposition l'un par rapport à l'autre sur le deuxième élément cadre (21) et réglables chacun de manière coulissante dans une direction d'un axe longitudinal de la seconde fente (22) de sorte que la longueur de la seconde fente (22) soit réglable par coulissement d'au moins un de ces panneaux de masquage (24-1, 24-2),
- une seconde paire de panneaux de masquage (26-1, 26-2) supportés chacun en opposition l'un par rapport à l'autre sur le deuxième élément cadre (21) et réglables chacun de manière coulissante orthogonalement à la direction de l'axe longitudinal de la seconde fente (22) de sorte que la largeur de la seconde fente (22) soit réglable par coulissement d'au moins un de ces panneaux de masquage (26-1, 26-2).

6. Porte-échantillon (1) selon la revendication 5, dans lequel le deuxième élément cadre (21) a une paire de rainures (27) opposées l'une à l'autre dans la direction orthogonale à la direction de coulissement de l'une (24-1, 24-2) des première et seconde paires de panneaux de masquage (24-1, 24-2, 26-1, 26-2) et s'étendant chacune dans la direction de coulissement, les bords des panneaux de masquage de la paire respective de panneaux de masquage (24-1, 24-2) opposés l'un à l'autre dans la direction orthogonale à la direction de coulissement s'engageant dans les rainures (27) de manière à constituer un guide linéaire pour le coulissement de la paire respective de panneaux de masquage (24-1, 24-2).

7. Porte-échantillon (1) selon la revendication 6, dans lequel les panneaux de masquage de l'autre (26-1, 26-2) des première et seconde paires de panneaux de masquage (24-1, 24-2, 26-1, 26-2) sont chacun serrés de manière réglable et coulissante entre des surfaces du deuxième élément cadre (21) d'une part, et les panneaux de masquage (24-1, 24-2) guidés par la paire de rainures (27) d'autre part.

8. Porte-échantillon (1) selon l'une quelconque des revendications 4 à 7, comprenant en outre
- un troisième élément cadre (41) ayant une ouverture traversante centrale (23) formée dans celui-ci et constituant l'espace de réception (30) pour recevoir l'échantillon, le troisième élément cadre (41) étant pris en sandwich entre le premier élément cadre (11) et le deuxième élément cadre (21).

9. Porte-échantillon (1) selon la revendication 8, comprenant en outre
- des moyens pour maintenir ensemble le troisième élément cadre (41) et le premier masque (10).

10. Procédé d'analyse de lumière/de flash laser d'un échantillon en forme de plaque, comprenant les étapes consistant à
- irradier deux premières zones rectangulaires d'une première face de l'échantillon avec une impulsion d'excitation électromagnétique provenant d'une source de rayonnement,
- détecter le rayonnement thermique émis par une seconde zone rectangulaire sur une seconde face de l'échantillon opposée de la première face en résultat de l'impulsion d'excitation au moyen d'un détecteur de rayonnement, un axe longitudinal de la seconde zone rectangulaire étant parallèle à un axe longitudinal des deux premières zones rectangulaires mais décalé orthogonalement par rapport à la direction de l'axe longitudinal des deux premières zones rectangulaires,
l'échantillon étant maintenu dans un porte-échantillon (1) selon l'une quelconque des revendications précédentes.
